# EUROPÄISCHE PATENTSCHRIFT

(11) **EP 1 206 413 B1**
(45) Veröffentlichungstag und Bekanntmachung des Hinweises auf die Patenterteilung: **15.01.2003**
(21) Anmeldenummer: 00956401.4
(22) Anmeldetag: 05.08.2000
(51) Int. Cl.: C02F 1/00

(54) **ANLAGE UND VERFAHREN ZUR BEHANDLUNG VON KREISLAUFWASSER OFFENER UMLAUFKÜHLSYSTEME**
SYSTEM AND METHOD FOR TREATING WATER CIRCULATING IN OPEN-CIRCUIT COOLING SYSTEMS
INSTALLATION ET PROCEDE POUR LE TRAITEMENT DE L'EAU CIRCULANT DANS DES SYSTEMES DE REFROIDISSEMENT A CIRCULATION OUVERTS

(30) Priorität: 14.08.1999 DE 19938615
(43) Veröffentlichungstag der Anmeldung: 22.05.2002
(73) Patentinhaber: Cognis Deutschland GmbH & Co. KG, 40551 Düsseldorf (DE)
(72) Erfinder: SFORZA-HEINEN, Giacinto, 41189 Mönchengladbach (DE); WERNER-BUSSE, Alfred, 40599 Düsseldorf (DE); SCHMITT, Wolfgang, 42107 Wuppertal (DE); WREDE, Norbert, 40593 Düsseldorf (DE); HATER, Wolfgang, 41564 Kaarst (DE); VIER, Jens, 40789 Monheim (DE)
(86) Internationale Anmeldenummer: EP0007610
(87) Internationale Veröffentlichungsnummer: WO01012558

(56) Entgegenhaltungen:
- DE-A- 3 150 073
- SU-A- 1 787 137
- US-A- 4 981 594
- US-A- 5 013 415
- US-A- 5 145 585
- US-A- 5 660 723

## Beschreibung

### Gebiet der Erfindung

Die Erfindung betrifft eine Wasserbehandlungsanlage für das Kreislaufwasser offener Umlaufkühlsysteme, insbesondere Kühlturmkreislaufsysteme, welche umfaßt eine an den Kreislaufwasserstrom des Umlaufkühlsystems angeschlossene Rohrleitung zum Abzweigen und Rückführen eines Teilstroms des Kühlwassers mit einer Filtereinheit und eine Zusatzwasserleitung für Frischwasser mit Anschluß an den Kreislaufwasserstrom.

### Stand der Technik

Wasserbehandlungsanlagen sind z. B. aus der **EP 0305897 B1** (Henkel KGaA) bekannt. Das Kreislaufwasser wird durch Wärmetauscher geleitet, dort erwärmt und dann zum Kühlturm geführt. Hier wird das Wasser durch Verdunstung im Luftstrom abgekühlt und emeut zur Kühlung von Anlagen, Reaktoren usw. eingesetzt. Bei solchen offenen Kühlsystemen ist es notwendig, die durch Verdunstung auftretenden Wasserverluste auszugleichen. Femer müssen dem Kühlkreislaufwasser Zusätze zur Verhinderung von Korrosionserscheinungen an metallischen Bauteilen sowie zur Verhinderung der Bildung organischer, anorganischer oder biologischer Ablagerungen zugegeben werden. Bekannt ist, das verdampfte Wasser durch unbehandeltes Wasser, z. B. Trinkwasser oder Grundwasser, oder durch vorbehandeltes, z.B. entcarbonisiertes oder vollentsalztes Wasser zu ersetzen. Durch den Zusatz von salzhaltigem Wasser, welches Calcium, Magnesium, Chlorid enthält, konzentrieren sich die Salze im Kühlsystem auf und führen im allgemeinen zu Ablagerungen von Calcium und Magnesium insbesondere an Stellen höherer Temperatur. Höhere Chloridgehalte fördern außerdem die Korrosion. Bekannt ist es, einen Teil des Kühlwassers von Zeit zu Zeit abzufluten, um die Salzkonzentration in einem tolerierbaren Umfang zu halten.

Um den Gehalt an suspendierten Feststoffen zu verringern, ist es bekannt, einen Teil des Kühlwassers, im allgemeinen 5 % des umlaufenden Kreislaufwassers, als Teilstrom zu entnehmen und über Filtrationseinrichtungen zu führen. Dort werden die suspendierten Feststoffe aus dem Kreislaufkühlwasser entfernt. Die Filtereinrichtungen werden von Zeit zu Zeit durch Rückspülen mit dem Kreislaufkühlwasser gereinigt, wobei das Rückspülwasser als Abwasser abgeleitet wird. Das Rückspülwasser enthält nur etwa 1 % Feststoff. In Folge des oben genannten Abflutens eines Teil des Kühlwassers und des Ableitens des Rückspülwassers als Abwasser entsteht ein Verlust an Wasserbehandlungschemikalien, der laufend ausgeglichen werden muß. Bei größeren Kühlsystemen ist dazu eine aufwendige Meß- und Regeleinrichtung erforderlich, wie sie beispielsweise in der bereits genannten EP 0305897 B1 beschrieben wird.

Ferner ist aufgrund der rechtlichen Vorgaben und der sensiblen chemischen Verhältnisse im Kreislaufkühlsystem, insbesondere was die Korrosion und die Ablagerungen betrifft, eine häufige chemisch-analytische Überwachung des Kreislaufkühlwassers erforderlich. Die bekannten, mit salzarmen bzw. salzfreiem Wasser betriebenen Systeme arbeiten ebenfalls nicht abwasserfrei, da die Filter durch Rückspülen gereinigt werden und das Rückspülwasser abgeleitet wird. Durch diesen Verlust von Filterrückspülwasser ist daher ebenfalls eine häufige analytische Überwachung sowie ein laufendes Zudosieren von Wasserbehandlungsmitteln erforderlich.

Der Erfindung liegt daher die Aufgabe zugrunde, eine Anlage der eingangs genannten Art zur Behandlung von Kreislaufwasser offener Umlaufkühlsysteme sowie ein entsprechendes Behandlungsverfahren zu entwickeln, das folgenden Anforderungen genügt. Suspendierte Feststoffe sollen weitgehend aus dem Kreislaufwasser entfernt werden, um die Ablagerungen zu verhindern und die Korrosionsrate herabzusetzen. Das gilt insbesondere für Feststoffe mit einer abrasiven Wirkung. Die Anlage soll mit salzarmem und insbesondere salzfreiem Wasser zu betreiben sein, damit im Kreislaufkühlwasser wenig korrosionsfördernde Stoffe, z. B. Chloridionen oder Sulfationen, vorhanden sind. Ein abwasserfreier Betrieb soll möglich sein, so daß Wasserbehandlungsmittel nicht ausgetragen werden, um zum einen Betriebskosten einzusparen und zum anderen das Eintragen von Chemikalien in Gewässer zu vermeiden. Die Menge des zuzugebenden Wassers soll möglichst gering gehalten werden, wobei insbesondere nur das im Kühlturm verdunstete Wasser ersetzt werden soll. Diese Forderung soll durch ein möglichst abwasserfreies Betreiben der Anlage erreicht werden. Ein besonders stabiler Betrieb des Kühlsystems soll ermöglicht werden, welcher den chemisch-analytisch Kontrollaufwand bei kontinuierlich oder diskontinuierlich betriebenen Systemen erheblich reduziert. Schließlich soll es möglich sein, bei diskontinuierlich betriebenen Systemen auf die im Stand der Technik während der Stillstandsphasen erforderliche Zwangsumwälzung zu verzichten.

### Beschreibung der Erfindung

Diese Aufgabe wird bei einer Anlage der eingangs genannten Art erfindungsgemäß dadurch gelöst, daß die Filtereinheit einen rückspülbaren ersten Filter und einen ohne Rückspülung zu reinigenden zweiten Filter umfasst, wobei der erste Filter über eine Leitung für das verschmutzte Rückspülwasser mit dem Einlass des zweiten Filters verbunden ist und der Filtratauslass des zweiten Filters über eine Rückführleitung mit dem Kreislaufstrom des offenen Umlaufkühlsystems verbunden ist

Auf diese Weise wird ein abwasserfrei arbeitendes Kühlsystem bzw. eine entsprechende Wasserbehandlungsanlage erreicht, wobei das Filtrat des Filters vollständig bzw. nahezu vollständig in das Kreislaufkühlwasser zurückgeführt wird. Ein Verlust von Wasserbehandlungschemikalien tritt dabei praktisch nicht auf, so daß eine laufende Nachdosierung dieser Behandlungsmittel nicht erforderlich ist. Da Abwasser nicht mehr anfällt, werden Betriebskosten eingespart und ein Eintrag von Chemikalien in Gewässer vermieden. Es muß nur noch das bei der Verdunstung verlorene Wasser ersetzt werden. Das im Stand der Technik zum Ersatz des bei der Filterreinigung anfallenden Abwassers erforderliche Zusatzwasser wird jedoch eingespart. Durch den fehlenden Austrag von Wasserbehandlungschemikalien ist ein sehr stabiler Betrieb des Kühlsystems möglich, und der Aufwand zur Kontrolle der Konzentration von Wasserbehandlungschemikalien kann sowohl bei kontinuierlich als auch bei diskontinuierlich betriebenen Systemen erheblich verringert werden.

Femer wird die Arbeitssicherheit erhöht, denn der Umgang mit einer größeren Menge an Wasserbehandlungschemikalien, welche in der Regel Gefahrstoffe darstellen, und deren Lagerung wird erheblich vermindert. Da der Schwellenwert für die wasserrechtliche Genehmigungspflicht in Deutschland von 0,5 m³ Abwasser pro Tag unterschritten wird, bedarf der Kühlturmbetrieb keiner wasserrechtlichen Genehmigung. Bei Direkteinleitem entfällt die Abwasserabgabe.

Auch die ökologischen Vorteile sind erheblich, denn der abwasserfreie Betrieb spart Wasser ein und entlastet die Gewässer von Wasserbehandlungschemikalien.

Eine ständige Dosiereinrichtung für die Wasserbehandlungschemikalien, wie sie aus dem Stand der Technik bekannt und auch dort notwendig ist, kann in der erfindungsgemäßen Anlage entfallen, da ein Austrag von Chemikalien kaum stattfindet.

Die erfindungsgemäße Anlage und das weiter unten beschriebene entsprechende erfindungsgemäße Verfahren läßt sich für alle Kreislaufkühlsysteme einsetzen.

Um im Stand der Technik einen zu hohen Verlust von Wasserbehandlungsmitteln zu vermeiden, wird nur ein geringer Teilstrom, bezogen auf das umlaufende Kreislaufwasser, filtriert. Dagegen kann mit der erfindungsgemäßen Anlage bzw. mit dem erfindungsgemäßen Verfahren ein erheblich größerer Teilstrom mit einer entsprechend erheblich effektiveren Reinigung des Kreislaufwassers filtriert werden, wobei insbesondere vorgeschlagen wird, daß der Teilstrom, bezogen auf das umlaufende Kreislaufkühlwasser, bis zu 50 % betragen kann. Erfindungsgemäß ist ein Verlust an Wasserbehandlungschemikalien nämlich nicht zu befürchten, da abwasserfrei gearbeitet wird.

In einer einfachen Ausführungsform kann nur ein Filter innerhalb der Filtereinheit vorgesehen sein, welcher ohne Rückspülung zu reinigen ist. Besonders bevorzugt ist es jedoch, wenn die Filtereinheit einen rückspülbaren ersten Filter und einen ohne Rückspülung zu reinigenden zweiten Filter umfaßt, wobei der erste Filter über eine Leitung für das verschmutzte Rückspülwasser mit dem Einlaß des zweiten Filters verbunden ist und der Filtratauslaß des zweiten Filters über eine Rückführleitung mit dem Kreislaufstrom des offenen Umlaufkühlsystems verbunden ist. Dabei wird der erste, rückspülbare Filter zur unmittelbaren Reinigung des abgezweigten Teilstromes des Kreislaufkühlwassers eingesetzt. Zur Rückspülung dieses Filters wird das Teilstromwasser oder ein anderer Anteil des Kreislaufkühlwassers verwendet. Das verschmutzte Rückspülwasser wird auf den nicht rückspülbaren Filter geleitet, wobei das Filtrat zurück in den Kreislauf geführt wird. Der am zweiten Filter anfallende Rückstand wird in stichfester Form ausgetragen, so daß nahezu das gesamte durch die Filtereinheit laufende Wasser wieder zurückgeführt wird. Der stichfeste Rückstand kann auf einfache Weise entsorgt, z. B. deponiert werden, da er nicht stärker als üblicher Hausmüll belastet ist.

Als der ohne Rückspülung zu reinigende Filter können unterschiedliche Filterarten, z. B. nicht rückspülbare Trommelfilter und auch andere Filter, eingesetzt werden. Bevorzugt ist jedoch, wenn der ohne Rückspülung zu reinigende Filter als Bandfilter ausgebildet ist.

Weiterhin wird vorgeschlagen, daß die Zusatzwasserleitung an eine Quelle für vollentsalztes Wasser angeschlossen ist. Damit werden keine neuen schädlichen Salze in das Kreislaufsystem eingebracht, wenn das im Kühlturm verdunstete Wasser ersetzt wird.

Alternativ ist es auch von Vorteil, wenn die Zusatzwasserleitung an eine Quelle für Dampfkondensat angeschlossen ist. Hier ergeben sich die gleichen Vorteile, denn das Dampfkondensat ist sehr salzarm. Es fällt bei den in der Industrie üblichen Heißdampfsystemen an, die zum Erhitzen von Reaktoren und anderen Anlagen gebraucht werden. Die nur sehr geringe Belastung des Kondensates mit Feststoff stört beim Betrieb des Kühlsystems nicht.

Die Erfindung betrifft außerdem ein Verfahren zur Behandlung von Kreislaufwasser offener Umlaufkühlsysteme, insbesondere Kühlturmkreislaufsysteme, wobei ein Teilstrom des Kühlwassers abgezweigt, mittels einer von Zeit zu Zeit gereinigten Filtereinheit gereinigt und zurückgeführt wird und wobei Zusatzwasser dem Kreislaufwasser zugefügt wird.

Die oben genannte erfindungsgemäße Aufgabe wird hier dadurch gelöst dass man den Teilstrom mit einem rückspülbaren ersten Filter (8) reinigt, den ersten Filter (8) von Zeit zu Zeit durch Rückspülen mit dem Teilstromwasser reinigt, das dabei erhaltene verunreinigte Rückspülwasser mit einem zweiten Filter (12) reinigt, den Rückstand am zweiten Filter (12) in stichfester Form austrägt und das Filtrat (13) des zweiten Filters (12) in den Kreislaufwasserstrom zurückführt.

Vorzugsweise reinigt man den teilstrom mit einem rückspülbaren ersten Filter, reinigt den ersten Filter von Zeit zu Zeit durch Rückspülen mit dem Teilstromwasser, reinigt das dabei erhaltene verunreinigte Rückspülwasser mit einem zweiten Filter, trägt den Rückstand am zweiten Filter in stichfester Form aus und führt das Filtrat des zweiten Filters in den Kreislaufwasserstrom zurück. Diese Ausgestaltung ist insbesondere für größere Kühlsysteme von Vorteil, da es besonders effektiv arbeitet.

Zum Ausgleich des im Kühlturm verdampften bzw. verdunsteten Wassers ist es von Vorteil, wenn man nur salzarmes Zusatzwasser und insbesondere salzfreies Zusatzwasser dem Kreislaufwasser hinzufügt. In einer ersten vorteilhaften Variante wird vorgeschlagen, daß man vollentsalztes Wasser als Zusatzwasser dem Kreislaufwasser zufügt. In einer zweiten, ebenfalls vorteilhaften Variante fügt man Dampfkondensat als Zusatzwasser dem Kreislaufwasser zu. Hier ergibt sich der weitere Vorteil, daß man für das Dampfkondensat, das ohnehin anfällt, wegen eventueller Verunreinigungen jedoch nicht zur Dampferzeugung genutzt werden kann, gegebenenfalls nach Wärmerückgewinnung eine sinnvolle Verwendung findet und es nicht, wie es üblich ist, als Abwasser austragen muß. Die entsprechenden wirtschaftlichen und ökologischen Vorteile liegen auf der Hand.

Aufgrund der sehr geringen Calcium- und Magnesiumkonzentrationen im Kreislaufkühlwasser werden Ablagerungen verhindert. Ein stets optimaler Wärmeübergang wird erreicht, und die Umwälzleistung kann reduziert werden. Instandhaltungs- und Wartungskosten werden durch die geringe Korrosionsrate und das Fehlen von Ablagerungen eingespart. Bei diskontinuierlichen betriebenen Systemen kann auf eine Zwangsumwälzung während der Stillstandsphasen verzichtet werden. Diese Vorteile gelten insbesondere dann, wenn als Zusatzwasser ein salzfreies oder salzarmes Wasser in das Kreislaufkühlwassersystem gegebenenfalls unter Zusatz eines geeigneten Korrosionsschutzmittels eingespeist wird.

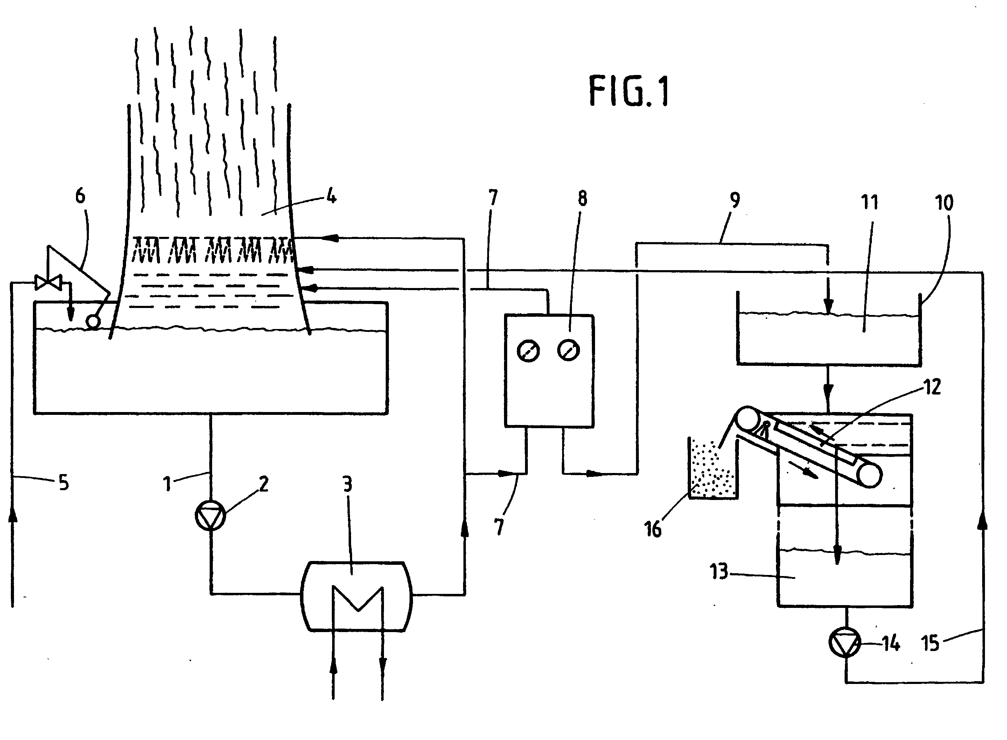

Im folgenden wird ein Ausführungsbeispiel einer erfindungsgemäßen Anlage anhand einer Zeichnung näher beschrieben, welche ein schematisches Fließbild der Anlage zeigt. Bei dem zur Atmosphäre hin offenen, abflutwasserfreien Kühlsystem handelt es sich um ein abwasserfreies Kühlsystem, das mit salzarmem bzw. vollentsalztem Wasser betrieben wird. Die im Kühlwasser suspendierten Feststoffe werden durch ein Filtersystem in stichfester Form ausgetragen, das Filtrat wird vollständig in den Kreislauf zurückgeführt. In diesem Umlaufkühlsystem wird der Rücklauf des Kühlwassers über eine ein- oder mehrstufige Filtrationsanlage geführt. Der Anteil des zu filtrierenden Wassers, bezogen auf die Umsatzleistung, kann 5 bis 100 % betragen. Das Filtrat wird vollständig in den Kühlturm zurückgeführt. Flüssigkeitsverluste werden durch salzfreies oder salzarmes Wasser ausgeglichen. Der Rückstand der Filtration ist trocken bis stichfest und kann als Abfall entsorgt werden. Abwasser fällt bei dem Betrieb des Systems nicht an. In Figur 1 ist eine zweistufige Filtration dargestellt, die nachfolgend noch im einzelnen erläutert wird.

Als Korrosionsschutzmittel können alle bekannten Kombinationen eingesetzt werden, vorzugsweise Molybdänverbindungen. Das System kann über den gesamten pH-Bereich betrieben werden, bei Einsatz von Molybdänverbindungen vorzugsweise bei pH 6 bis 9. Das System arbeitet aufgrund der Abwasserfreiheit stabil, und es kann in der Regel auf eine pH-Nachführung verzichtet werden.

Das System kann mit allen gängigen Bioziden gefahren werden, vorzugsweise jedoch mit solchen, bei deren Zersetzung keine Rückstände im Kreislaufkühlwasser verbleiben, z. B. Wasserstoffperoxid und Ozon.

Mit der in Figur 1 dargestellten Anlage wird Kühlwasser über eine Hauptstromleitung 1 mittels einer Umwälzpumpe 2 zu einem Verbraucher, nämlich einem Wärmetauscher 3, geleitet und von dort in einen Kühlturm 4 geführt, wo sich das im Wärmetauscher 3 erhitzte Wasser wieder abkühlt. Von dort wird es wieder in die Leitung 1 eingespeist.

Das im Kühlturm 4 verdunstete Wasser wird über eine Zusatzwasserleitung 5, welche mit vollentsalztem Wasser oder Dampfkondensat betrieben wird, ausgeglichen. Eine am Auslaß der Leitung 5 angeordnete Niveau-Regeleinrichtung 6 ist in Figur 1 schematisch angedeutet.

An den durch die Leitung 1 fließenden Kreislaufwasserstrom ist eine Rohrleitung 7 angeschlossen, um einen Teilstrom abzuzweigen, der nach Reinigung in einem ersten Filter 8 wieder in das Kreislaufwasser zurückgeführt wird. Der erste Filter 8 ist von Zeit zu Zeit durch Rückspülung mit dem Teilstromwasser zu reinigen. Dabei wird das verschmutzte Rückspülwasser über eine Leitung 9 in einem Behälter 10 für das verschmutzte Rückspülwasser 11 gesammelt und von dort einem Bandfilter 12 zugeführt. Das erhaltene Filtrat 13 wird mittels einer Pumpe 14 über eine Rückführleitung 15 dem Kreislaufwasserstrom, im vorliegenden Beispiel direkt dem Kühlturm 4, zurückgeführt. Der auf dem Bandfilter 12 verbleibende stichfeste bis trockene Rückstand fällt in einen Feststoffbehälter 16 und wird dort bis zur Deponierung gesammelt.

### Bezugszeichenliste

- 1: Hauptstromleitung
- 2: Umwälzpumpe
- 3: Wärmetauscher
- 4: Kühlturm
- 5: Zusatzwasserleitung
- 6: Niveau-Regeleinrichtung
- 7: Rohrleitung
- 8: erster Filter
- 9: Leitung
- 10: Behälter
- 11: Rückspülwasser
- 12: Bandfilter, zweiter Filter
- 13: Filtrat
- 14: Pumpe
- 15: Rückführleitung
- 16: Feststoffbehälter

## Patentansprüche

1. Wasserbehandlungsanlage für das Kreislaufwasser offener Umlaufkühlsysteme, insbesondere Kühlturmkreislaufsysteme, welche eine an den Kreislaufwasserstrom des Umlaufkühlsystems angeschlossene Rohrleitung (7) zum Abzweigen und Rückführen eines Teilstroms des Kühlwassers mit einer Filtereinheit und eine Zusatzwasserleitung (5) für Frischwasser mit Anschluss an den Kreislaufwasserstrom umfasst, **dadurch gekennzeichnet, dass** die Filtereinheit einen rückspülbaren ersten Filter (8) und einen ohne Rückspülung zu reinigenden zweiten Filter (12) umfasst, wobei der erste Filter (8) über eine Leitung (9) für das verschmutzte Rückspülwasser mit dem Einlass des zweiten Filters (12) verbunden ist und der Filtratauslass des zweiten Filters (12) über eine Rückführleitung (15) mit dem Kreislaufstrom des offenen Umlaufkühlsystems verbunden ist.

2. Wasserbehandlungsanlage nach Anspruch 1, **dadurch gekennzeichnet, dass** der ohne Rückspülung zu reinigende Filter als Bandfilter (12) ausgebildet ist.

3. Wasserbehandlungsanlage nach den Ansprüchen 1 und/oder 2, **dadurch gekennzeichnet, dass** die Zusatzwasserleitung (5) an eine Quelle für vollentsalztes Wasser angeschlossen ist.

4. Wasserbehandlungsanlage nach mindestens einem der Ansprüche 1 bis 3, **dadurch gekennzeichnet, dass** die Zusatzwasserleitung (5) an eine Quelle für Dampfkondensat angeschlossen ist.

5. Verfahren zur Behandlung von Kreislaufwasser offener Umlaufkühlsysteme, Insbesondere Kühlturmkreislaufsysteme, wobei ein Teilstrom des Kühlwassers abgezweigt, mittels einer von Zeit zu Zeit gereinigten Filtereinheit gereinigt und zurückgeführt wird und wobei Zusatzwasser dem Kreislaufwasser zugefügt wird, **dadurch gekennzeichnet, dass** man den Teilstrom mit einem rückspülbaren ersten Filter (8) reinigt, den ersten Filter (8) von Zeit zu Zeit durch Rückspülen mit dem Teilstromwasser reinigt, das dabei erhaltene verunreinigte Rückspülwasser mit einem zweiten Filter (12) reinigt, den Rückstand am zweiten Filter (12) In stichfester Form austrägt und das Filtrat (13) des zweiten Filters (12) in den Kreislaufwasserstrom zurückführt.

6. Verfahren nach Anspruch 5, **dadurch gekennzeichnet, dass** man vollentsalztes Wasser als Zusatzwasser dem Kreislaufwasser zufügt.

7. Verfahren nach den Ansprüchen 5 und/oder 6, **dadurch gekennzeichnet, dass** man Dampfkondensat als Zusatzwasser dem Kreislaufwasser zufügt.

## Claims

1. A water treatment unit for the circuit water of open-circuit cooling systems, more particularly for cooling tower circuits, comprising a pipe (7) with a filter unit connected to the circuit water stream of the cooling circuit for branching off and returning a part stream of the cooling water and a pipe (5) for adding fresh water connected to the circuit water stream, **characterized in that** the filter unit comprises a backwashable first filter (8) and a second filter (12) which can be cleaned without backwashing, the first filter (8) being connected to the inlet of the second filter (12) by a pipe (9) for the soiled backwash water and the filtrate outlet of the second filter (12) being connected by a return pipe (15) to the circuit stream of the open circuit cooling system.

2. A water treatment unit as claimed in claim 1, **characterized in that** the filter to be cleaned without backwashing is a band filter (12).

3. A water treatment unit as claimed in claims 1 and/or 2, **characterized in that** the fresh water pipe (5) is connected to a source of deionized water.

4. A water treatment unit as claimed in any of claims 1 to 3, **characterized in that** the fresh water pipe (5) is connected to a source of steam condensate.

5. A process for treating circuit water of open circuit cooling systems, more particularly cooling tower circuits, in which a part stream of the cooling water is branched off, cleaned in a periodically cleaned filter unit and recycled and fresh water is added to the circuit water, **characterized in that** the part stream is cleaned in a backwashable first filter (8), the first filter (8) is periodically cleaned by backwashing with the part stream water, the soiled backwash water obtained is cleaned in a second filter (12), the residue on the second filter (12) is discharged in compact forrn and the filtrate (13) of the second filter (12) is returned to the circuit water stream.

6. A process as claimed in claim 5, **characterized in that** deionized water is added to the circuit water as fresh water.

7. A process as claimed in claims 5 and/or 6, **characterized in that** steam condensate is added to the circuit water as fresh water.

## Revendications

1. Installation de traitement d'eau pour l'eau du circuit de systèmes de refroidissement à circuit ouvert, en particulier des systèmes à tour de refroidissement, comprenant une conduite tubulaire (7) raccordée au courant d'eau du circuit du système de refroidissement, destinée à dériver et recycler une partie du courant d'eau de refroidissement et équipée d'une unité de filtration, ainsi qu'une conduite d'eau additionnelle (5) d'amenée d'eau fraîche, raccordée au courant d'eau du circuit, **caractérisée en ce que** l'unité de filtration comprend un premier filtre (8) nettoyable à contre-courant et un second filtre (12) à nettoyer sans contre-courant, le premier filtre (8) étant relié par une canalisation (9) amenant l'eau polluée issue du nettoyage à contre-courant, à l'entrée du second filtre (12) dont la sortie est reliée par une conduite de retour (15) au courant d'eau du circuit du système de refroidissement.

2. Installation selon la revendication 1, **caractérisée en ce que** le filtre à nettoyer sans contre-courant est un filtre à bande (12).

3. Installation selon l'une quelconque des revendications 1 et/ou 2, **caractérisée en ce que** la conduite d'eau additionnelle (5) est raccordée à une source d'eau totalement déminéralisée.

4. Installation selon l'une quelconque des revendications 1 à 3, **caractérisée en ce que** la conduite d'eau additionnelle (5) est raccordée à une source alimentée en vapeur condensée.

5. Procédé de traitement de l'eau du circuit de systèmes de refroidissement à circuit ouvert, en particulier des systèmes à tour de refroidissement, selon lequel une partie du courant d'eau de refroidissement est dérivée, purifiée par une unité de filtration nettoyée de temps en temps, puis réinjectée, de l'eau additionnelle étant amenée à l'eau de circulation, **caractérisé en ce qu'** on nettoie le courant partiel au moyen d'un premier filtre lavable à contre-courant (8), on lave ce filtre (8) de temps en temps à contre-courant par l'eau du courant partiel et l'eau souillée produite par ce nettoyage est purifiée par un second filtre (12) dont le résidu est évacué sous forme plus ou moins solide, tandis que le filtrat (13) du filtre (12) est ramené au circuit d'eau de refroidissement.

6. Procédé selon la revendication 5, **caractérisé en ce que** dans l'eau du circuit, on introduit comme eau additionnelle de l'eau totalement déminéralisée.

7. Procédé selon l'une quelconque des revendications 5 et/ou 6, **caractérisé en ce que** dans l'eau du circuit, on introduit comme eau additionnelle de la vapeur condensée.
